(19) Europäisches Patentamt
European Patent Office
Office européen des brevets

(11) **EP 4 071 343 A2**

(12) **EUROPÄISCHE PATENTANMELDUNG**

(43) Veröffentlichungstag:
**12.10.2022 Patentblatt 2022/41**

(21) Anmeldenummer: **22157089.8**

(22) Anmeldetag: **16.02.2022**

(51) Internationale Patentklassifikation (IPC):
**F02M 26/06** (2016.01)   **F02M 26/49** (2016.01)
**F02D 41/14** (2006.01)   **F02D 35/02** (2006.01)

(52) Gemeinsame Patentklassifikation (CPC):
**F02D 41/0072; F02D 41/1456; F02D 41/1458;
F02M 26/06; F02M 26/49;** F02D 35/027;
F02D 41/1498; F02P 5/152

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **07.04.2021 DE 102021203431**

(71) Anmelder: **VOLKSWAGEN AG**
**38440 Wolfsburg (DE)**

(72) Erfinder:
• **Hauptvogel, Mathias**
**39356 Weferlingen (DE)**
• **Lachmann, Wencke**
**21682 Stade (DE)**
• **Binder, Tanja**
**31275 Lehrte (DE)**
• **Buchholz, Max**
**38518 Gifhorn (DE)**

(54) **DIAGNOSEVERFAHREN, STEUERUNG, KRAFTFAHRZEUG**

(57) Diagnoseverfahren für eine Niederdruck-Abgasrückführung einer Brennkraftmaschine, umfassend:
Ausführen (41; 51) einer Abgasrückführung;
Erfassen (42; 52) eines aktuellen Diagnosesensorwertes für ein Niederdruck-Abgasrückführsystem (12) mittels eines Diagnosesensors (10, 16, 17, 19, 20), wobei der Diagnosesensorwert indikativ ist für eine Abweichung eines Ist-Abgasflusses der Niederdruck-Abgasrückführung von einem Soll-Abgasfluss; und
Ermitteln (43; 54), ob die Abweichung vorliegt basierend auf dem Diagnosesensorwert.

Fig. 4

**Beschreibung**

Die Erfindung betrifft ein Diagnoseverfahren für einen Niederdruck-Abgaszweig, eine Steuerung, und ein Kraftfahrzeug.

Generell ist es bekannt, in einer Brennkraftmaschine, Abgas, das bei einer Verbrennung entsteht, über einen Niederdruck- und/oder Hochdruckzweig in eine Frischluftzufuhr rückzuführen.

Hierfür können jedoch technische, marktspezifische und/oder gesetzliche Anforderungen, basierend auf denen Fehler erkannt werden müssen, vorliegen. Solche Fehler umfassen bspw. High-Flow- und Low-Flow-Fehler, können also einen Massefluss oder eine Masseflussrate in einer Abgasrückführung (AGR) betreffen.

Beispielsweise ist aus der Patentschrift DE 10 2013 200 536 B3 ein Verfahren zur Diagnose einer Anordnung zur Niederdruck-Abgasrückführung einer Brennkraftmaschine bekannt. In diesem Verfahren wird jedoch kein Diagnosesensorwert erfasst, der indikativ für eine Abweichung eines Abgasflusses ist. Des Weiteren wird dort eine direkte Massenstrommessung durchgeführt, um einen AGR-Fehler zu bestimmen, was jedoch in einer aufwendigen Messung resultieren könnte.

Aufgabe der vorliegenden Erfindung ist es, ein Diagnoseverfahren, eine Steuerung, und ein Kraftfahrzeug bereitzustellen, das die oben genannten Nachteile wenigstens teilweise überwinden.

Diese Aufgabe wird durch das Diagnoseverfahren nach Anspruch 1, die Steuerung nach Anspruch 14, und das Kraftfahrzeug nach Anspruch 15 gelöst.

Nach einem ersten Aspekt betrifft die vorliegende Offenbarung ein Diagnoseverfahren für eine Niederdruck-Abgasrückführung einer Brennkraftmaschine, umfassend:

Ausführen einer Abgasrückführung;

Erfassen eines aktuellen Diagnosesensorwertes für ein Niederdruck-Abgasrückführsystem mittels eines Diagnosesensors, wobei der Diagnosesensorwert indikativ ist für eine Abweichung eines Ist-Abgasflusses der Niederdruck-Abgasrückführung von einem Soll-Abgasfluss; und Ermitteln, ob die Abweichung vorliegt basierend auf dem Diagnosesensorwert.

Nach einem zweiten Aspekt betrifft die vorliegende Offenbarung eine Steuerung, die dazu eingerichtet ist, ein Diagnoseverfahren nach dem ersten Aspekt auszuführen.

Nach einem dritten Aspekt betrifft die vorliegende Offenbarung ein Kraftfahrzeug, das eine Steuerung nach dem zweiten Aspekt aufweist.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ausführungsbeispiele der Erfindung werden beispielhaft und unter Bezugnahme auf die beigefügten Zeichnungen beschrieben, in der:

Fig. 1 schematisch ein Ausführungsbeispiel einer Brennkraftmaschine gemäß der vorliegenden Offenbarung in einem Schaltbild zeigt;

Fig. 2 ein Diagramm, das symbolisch die AGR-Rate bei aktiver Klopf- und Laufunruheerkennung zeigt;

Fig. 3 ein Diagramm, in dem eine relative Kraftstoffmasse gegen eine relative Luftfüllung aufgetragen ist, zeigt;

Fig. 4 ein Diagnoseverfahren gemäß der vorliegenden Offenbarung in einem Blockdiagramm zeigt;

Fig. 5 ein weiteres Ausführungsbeispiel eines Diagnoseverfahrens gemäß der vorliegenden Offenbarung in einem Blockdiagramm zeigt;

Fig. 6 ein weiteres Ausführungsbeispiel eines Diagnoseverfahrens gemäß der vorliegenden Offenbarung in einem Blockdiagramm zeigt; und

Fig. 7 ein Kraftfahrzeug mit einer Steuerung gemäß der vorliegenden Offenbarung in einem Blockdiagramm zeigt.

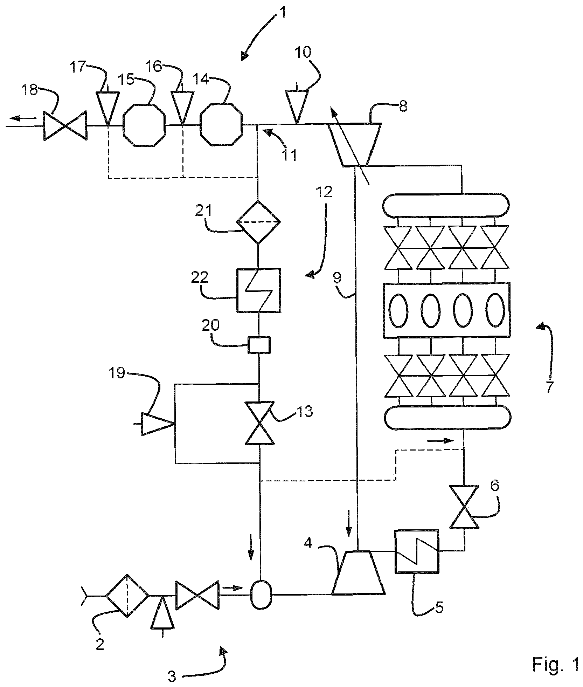

Bevor Ausführungsbeispiele der vorliegenden Offenbarung unter Bezugnahme zu Fig. 1 beschrieben werden, werden allgemeine Ausführungen zur vorliegenden Offenbarung gegeben.

Wie eingangs diskutiert sind Verfahren zur Diagnose einer AGR allgemein bekannt.

Ferner wurde erkannt, dass es nicht in jedem Fall notwendig ist, einen AGR-Fehler zu quantifizieren, da es ausreichend sein kann, dass schlicht erkannt wird, dass ein Fehler vorliegt.

Deshalb betreffen manche Ausführungsbeispiele ein Diagnoseverfahren für eine Niederdruck-Abgasrückführung einer Brennkraftmaschine, umfassend: Ausführen einer Abgasrückführung; Erfassen eines aktuellen Diagnosesensorwertes für ein Niederdruck-Abgasrückführsystem mittels eines Diagnosesensors, wobei der Diagnosesensorwert indikativ ist für eine Abweichung eines Ist-Abgasflusses der Niederdruck-Abgasrückführung von einem Soll-Abgasfluss; und Ermitteln, ob die Abweichung vorliegt basierend auf dem Diagnosesensorwert.

Gemäß der vorliegenden Offenbarung kann das Diagnoseverfahren ausgeführt werden, während die Abgasrückführung stattfindet.

Generell kann die Abgasrückführung umfassen, dass während eines Verbrennungsprozesses produziertes Abgas in einen Frischluftzweig rückgeführt wird, wie es generell bekannt ist.

Um das Diagnoseverfahren auszuführen wird, in manchen Ausführungsbeispielen, während die Abgasrückführung in einem Niederdruck-Abgasrückführsystem (ND-AGR) ausgeführt wird, ein aktueller Diagnosesensorwert mittels eines Diagnosesensors erfasst.

Der Diagnosesensor kann mehrere (verschiedene oder gleichartige) Sensoren umfassen, die direkt oder indirekt auf verschiedene Parameter des Abgases hindeuten können. Beispielsweise kann ein Abgasmassenstromsensor, ein Temperatursensor, ein Drucksensor, ein $\lambda$-Sensor (oder-Sonde), und/oder dergleichen vorgesehen sein.

Entsprechend kann der Diagnosesensorwert einen oder mehrere Werte umfassen.

Der Diagnosesensorwert ist, in manchen Ausführungsbeispielen, indikativ für eine Abweichung eines Ist-Abgasflusses der ND-AGR von einem Soll-Abgasfluss. Der Soll-Abgasfluss umfasst einen Massenstrom von Abgasen, der basierend auf verschiedenen Vorgaben eingehalten werden sollte, wie zum Beispiel gesetzliche Vorgaben, werksseitige Vorgaben, Effizienzüberlegung, und dergleichen.

Basierend auf dem Diagnosesensorwert kann direkt oder indirekt auf die Abweichung geschlossen werden. Beispielsweise kann der Diagnosesensorwert direkt den Massenstrom umfassen, sodass eine Abweichung ober- oder unterhalb eines vorgegebenen Schwellwerts der Abweichung des Ist-Abgasflusses von dem Soll-Abgasfluss entspricht.

In manchen Ausführungsbeispielen kann ein Fehlererkennungsverfahren basierend auf einem Diagnosesensor ausgeführt werden, das darauf schließen lässt, dass ein Fehler in der AGR vorliegt, wenn die AGR ausgeführt wird. Beispielsweise kann eine Klopferkennung ausgeführt werden, die keinen Fehler erkennt, während die AGR nicht ausgeführt wird. Wenn aber ein Fehler erkannt wird, während der AGR aktiv ist, kann daraus geschlossen werden, dass ein Fehler in der AGR vorliegt (bspw. ein Low-Flow-Fehler, d.h. zu wenig Abgas wird rückgeführt).

In solchen Ausführungsbeispielen muss die Abweichung nicht explizit bestimmt werden, da es ausreichend ist, zu erkennen, dass sie vorliegt.

Die Brennkraftmaschine kann auf verschiedene Arten ausgestaltet sein, beispielsweise basierend auf einem Ottomotor, einem Dieselmotor, oder dergleichen.

Fig. 1 zeigt eine Brennkraftmaschine 1 gemäß der vorliegenden Offenbarung in einem Schaltbild, wobei zusätzlich verschiedene optionale Zweige (gestrichelte Linien) und Elemente des Schaltbilds dargestellt sind. Die optionalen Zweige und Elemente können dafür genutzt werden, um die verschiedenen Ausführungsbeispiele des Diagnoseverfahrens gemäß der vorliegenden Offenbarung auszuführen.

Zunächst werden daher die nicht-optionalen Elemente und Zweige der Brennkraftmaschine 1 beschrieben.

Die Brennkraftmaschine 1 weist einen Luftfilter 2 auf, nach welchem eine Frischluftstrecke 3 angeordnet ist. Dadurch kann Frischluft einem Verdichter 4 und einem Ladeluftkühler 5 zugeführt werden. Hinter dem Ladeluftkühler 5 ist eine Drosselklappe 6 angeordnet, wohinter sich ein Verbrennungsmotor 7 befindet.

Hinter dem Verbrennungsmotor 7 ist eine Turbine 8 angeordnet, der über eine Welle 9 mit dem Verdichter 4 gekoppelt ist und damit den Verdichter antreibt. Somit wird in dieser Brennkraftmaschine 1 ein Abgasturbolader verwendet, wobei die vorliegende Offenbarung nicht darauf beschränkt ist. Beispielsweise kann die Turbine auch elektrisch angetrieben werden, wie es generell bekannt ist.

Des Weiteren weist die Brennkraftmaschine 1 eine $\lambda$-Sonde 10 auf, die hinter der Turbine 8 angeordnet ist, wonach sich eine Verzweigung 11 befindet, wodurch die Abgasstrecke aufgeteilt wird. Ein Teil des entstandenen Abgases wird durch einen Abgasrückführungszweig 12 (AGR-Zweig) der Luftstrecke wieder zugeführt. Ein anderer Teil des Abgases wird ausgeleitet.

Der AGR-Zweig 12 weist ein AGR-Ventil 13 auf.

Optional können für die Ausleitung des Abgases Katalysatoren 14 und/oder 15 sowie weitere I-Sonden 16 und/oder 17, sowie eine Abgasklappe 18 vorgesehen sein.

Damit kann, in manchen Ausführungsbeispielen, eine Abgasrückführungsrate bestimmt werden.

Deshalb umfasst, in manchen Ausführungsbeispielen, das Diagnoseverfahren ferner: Ermitteln einer Abgasrückführungsrate.

Durch Ermitteln der Abgasrückführungsrate kann der Ist-Abgasfluss durch die AGR relativ zum Gesamtabgasfluss bestimmt werden.

In manchen Ausführungsbeispielen umfasst das Diagnoseverfahren ferner: Erkennen einer Laufunruhe basierend auf dem aktuellen Diagnosesensorwert.

Wenn die Laufunruheerkennung (bzw. Verbrennungsaussetzererkennung) eine Laufunruhe (oder einen oder mehrere Verbrennungsaussetzer) erkennt, während die AGR aktiv ist, kann darauf geschlossen werden, dass ein AGR-High-Flow-Fehler vorliegt, d.h. dass zu viel Abgas rückgeführt wird.

Somit ist in manchen Ausführungsbeispielen die Abweichung indikativ für einen Abgasrückführungs-High-Flow-Fehler.

Wenn zusätzlich die AGR-Rate bestimmt wird, wie oben beschrieben (also wenn die zusätzlichen λ-Sonden 16 und 17 vorgesehen sind), kann zusätzlich bestimmt werden, wie viel Abgas zu viel rückgeführt wird, damit die AGR-Rate entsprechend eingestellt werden kann.

In manchen Ausführungsbeispielen umfasst das Diagnoseverfahren ferner: Erkennen eines Klopfens basierend auf dem aktuellen Diagnosesensorwert, wie oben beschrieben.

Die Abweichung ist dann indikativ für einen AGR-Low-Flow-Fehler, wie oben beschrieben.

Zusätzlich kann auch hier die AGR-Rate bestimmt werden (sofern die zusätzlichen λ-Sonden 16 und 17 vorgesehen sind), sodass die Abgasmenge entsprechend geregelt werden kann.

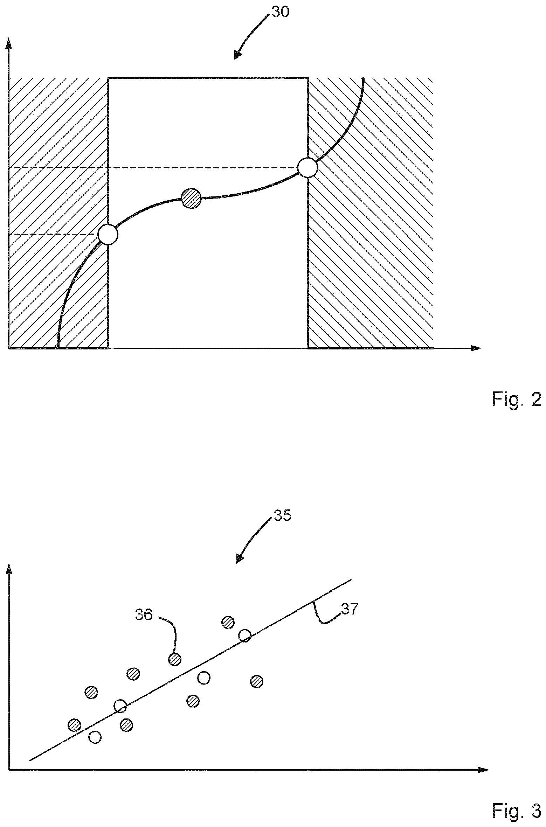

Fig. 2 zeigt ein Diagramm 30, das symbolisch die AGR-Rate bei aktiver Klopf- und Laufunruheerekennung zeigt. Die AGR-Rate steigt rapide an, wenn Laufunruhe erkannt wird. Dabei werden jedoch zu viele Abgasemissionen produziert, d.h. ein High-Flow-Fehler liegt vor. Die AGR-Rate sinkt rapide ab, wenn Klopfen erkannt wird, sodass zu wenig Abgas produziert wird, d.h. ein Low-Flow-Fehler liegt vor.

In manchen Ausführungsbeispielen umfasst das Diagnoseverfahren ferner: Bestimmen einer Lambdaregelabweichung.

Die λ-Regetabweichung kann als zusätzliches Kriterium herangezogen werden, um einen AGR-Fehler zu ermitteln. Beispielsweise kann für eine der hierin beschriebenen λ-Sonden ein vorgegebener Wertebereich bestimmt sein, in welchem sich ein Kraftstoff-Luft-Gemisch bewegen darf, ohne dass ein AGR-Fehler diagnostiziert wird (obwohl die Klopferkennung bzw. die Laufunruheerkennung alleine auf einen Fehler schließen ließe).

In manchen Ausführungsbeispielen wird die Lambdaregelabweichung basierend auf einer kleinsten-Quadrate-Methode zwischen einer Luftmenge und einer Kraftstoffmenge bestimmt. Damit kann eine Varianz um den vorgegebenen λ-Wert definiert werden, was zu einer Erhöhung einer Fehlererkennungsgenauigkeit führt.

Alternativ oder zusätzlich kann die Brennkraftmaschine 1 um das AGR-Ventil 13 einen Differenzdrucksensor 19 oder Einzeldrucksensoren vor und nach dem AGR-Ventil aufweisen. Damit kann ein Druck vor und nach dem AGR-Ventil bzw. ein Differenzdruck bestimmt werden. Ferner kann vor dem AGR-Ventil 13 ein Temperatursensor 20 angeordnet sein, der dazu eingerichtet ist, die Temperatur des rückgeführten Abgases zu bestimmen.

Ferner kann noch ein AGR-Filter 21 und ein AGR-Kühler 22 vorgesehen sein, um das rückgeführte Abgas zu filtern und es zu kühlen, bevor es in den Frischluftzweig 3 rückgeführt wird. Diese beiden Elemente sind nicht zwingend notwendig, können jedoch hilfreich sein, um ein Massenstrommodell des rückgeführten Abgases genauer bestimmen zu können.

Gemäß der vorliegenden Offenbarung ist es nämlich nicht zwingend notwendig, den Massenstrom bzw. die AGR-Rate direkt zu messen (wie oben beschrieben), da sie auch basierend auf dem Differenzdruck und der Temperatur modelliert werden kann.

In solchen Ausführungsbeispielen umfasst das Diagnoseverfahren ferner: Durchführen eines Massenstromvergleichs basierend auf dem aktuellen Diagnosesensorwert.

Die entsprechenden Diagnosesensoren sind hierbei die Druck- und Temperatursensoren (bzw. der Differenzdrucksensor und der Temperatursensor).

Der Massenstromvergleich kann auf einem Füllungsmodell um die Drosselklappe 6 basieren. Beispielsweise kann der Massenstromvergleich zunächst auf der AGR-Rate basieren, die mathematisch folgendermaßen darstellbar ist:

$$r_{AGR} = \frac{mf_{AGR}}{mf_{AGR} + mf_{Luft}}$$

Die AGR-Rate ist hier dargestellt basierend auf einem rückgeführten Abgasmassestrom im Verhältnis zu einem Gesamtmassestrom. Der Massestrom der Frischluft $mf_{Luft}$ kann mit einem Luftmassenmesser (HFM) 22 bestimmt werden.

Des Weiteren basiert das Füllungsmodell um die Drosselklappe auf einer Funktion f, die von Parametern wie Motordrehzahl, Saugrohrdruck, Abgasdruck, Umgebungsdruck, Nockenwellenpositionen, Ansaugtemperatur, und dergleichen abhängt.

$mf_{AGR}$ kann mathematisch folgendermaßen dargestellt werden:

$$mf_{AGR} = A_{eff} * p_{vor} * \sqrt{\frac{2}{R * T_{vor}}} * \psi(\kappa, \frac{p_{vor}}{p_{nach}})$$

Hier ist $A_{eff}$ eine Lagerückmeldung des AGR-Ventils, $p_{vor}$ der Druck vor dem AGR-Ventil, $p_{nach}$ der Druck nach dem AGR-Ventil (alternativ kann dieser Quotient auch als Differenzdruck direkt gemessen werden), $T_{var}$ die Temperatur vor dem AGR-Ventil, $\psi$ eine Durchflussfunktion und $\kappa$ der Isentropenexponent.

Entsprechend kann auch $mf_{Luft}$ bestimmt werden. Dafür können entsprechende Drucksensoren und ein Temperatursensor um die Drosselklappe angebracht werden.

Entsprechend basiert, in manchen Ausführungsbeispielen, der Massenstromvergleich auf einem Drosselklappenmodell.

In manchen Ausführungsbeispielen basiert Massenstromvergleich ferner auf einem Frischluftmassenstromwert, wie hierin beschrieben.

Der Vergleich der Massenströme miteinander kann zur Bewertung eine High-/Low-Flow-Fehlers herangezogen werden. In manchen Ausführungsbeispielen kann der Vergleich der Massenströme als Differenz zwischen einem modellierten Drosselklappenmassenstrom und eine Massenstrom des Luftmassenmessers 22 sowie dem modellierten AGR Massenstrom dargestellt werden, mathematisch: $j_D - j(_F + j_{AGR})$. $j$ bezeichnet hier einen Massenstrom, D bezeichnet die Drosselklappe, F bezeichnet Frischluft.

Ist das Ergebnis dieses Vergleichs höher als ein vorgegebener Schwellwert, liegt ein High-Flow-Fehler vor. Ist das Ergebnis niedriger als ein vorgegebener (anderer) Schwellwert, liegt ein Low-Flow-Fehler vor.

Um Mess- bzw. Modellwertsensitivitäten zu erhöhen, kann ein Werteabgleich der ermittelten Massenströme über die Drosselklappe und über den gemessenen HFM-Wert durchgeführt werden.

Beispielsweise kann in einem definierten Drehzahl-/Lastbereich des Motors ohne AGR oder mit bekanntem (oder zu vertrauendem) (externen) AGR-Wert ein Abgleich der Massenströme (HFM und Drosselklappe) durchgeführt werden.

Liegt dort eine Abweichung vor, so kann der Wert des Luftmassenmessers 22 auf den Wert des modellierten Drosselklappenmassenstroms (oder umgekehrt) adaptiert werden. Diese Adaption kann mit Fehlerschwellen versehen werden. Wird eine Fehlerschwelle überschritten, so kann daraus auf einen Fehler des Luftmassenmessers 22 geschlossen werden (bspw. Steigungsfehler).

Die HFM-Adaption kann, wenn die AGR nicht aktiv ist, folgendermaßen exemplarisch dargestellt werden:

$$j_D = k_{HFM} * j_F.$$

$k_{HFM}$ ist hierbei ein Adaptionsfaktor für den Massenstrom des Luftmassenstrommessers.

Die HFM-Adaption kann, wenn die externe AGR aktiv ist, folgendermaßen exemplarisch dargestellt werden:

$$\Delta j_{AGR} = j_D - ((k_{HFM} * j_{HFM}) + j_{AGR}),$$

wobei $\Delta j_{AGR}$ eine Abweichung eines Massenstromabgleichs aus der externen AGR darstellt.

Hierbei wird die Abweichung des Massenstromabgleichs aus der externen AGR mit einem Wertebereich (abhängig von Motordrehzahl/-last) verglichen. Liegt die Abweichung außerhalb des Wertebereicht (innerhalb einer definierten Entprellzeit), so kann dies als Fehler in einem Fehlerspeicher hinterlegt werden.

In manchen Ausführungsbeispielen umfasst das Diagnoseverfahren ferner: Bestimmen einer Lambdaregelabweichung.

Zusätzlich zu der Modellierung und Bestimmung der Massenströme, kann auch hier eine Lambdaregelabweichung zu Rate gezogen werden, wie bereits oben beschrieben.

In manchen Ausführungsbeispielen wird die Lambdaregelabweichung basierend auf einer kleinsten-Quadrate-Methode zwischen einer Luftmenge und einer Kraftstoffmenge bestimmt, wie hierin beschrieben.

Im Folgenden wird die Bestimmung der Lambdaregelabweichung näher beschrieben, wobei diese Erklärungen auch für den weiter oben beschriebenen Fall (Lambdaregelabweichung bei Klopf-/Laufunruheerkennung) gelten.

Über die hierin beschrieben Füllungserfassung und den damit bestimmten Massenstromdifferenzen bzw. Massenströmen können nur Massenströme bestimmt und miteinander verglichen werden, d.h. Restgasanteile und Frischluftanteile können nicht gemessen, sondern nur modelliert werden.

Der Anteil des Restgases, der sich beispielsweise in der Luftstrecke 3 befindet und der Verbrennung zugeführt wird, kann durch die Bestimmung des rückgeführten AGR-Massenstroms bestimmt werden und in eine Vorsteuerung der Lambdaregelung mit einbezogen werden.

Diese Massenströme können jedoch trotzdem fehlerhaft sein (bspw. aufgrund einer Leckage, Verstopfung in den jeweiligen Luft-/AGR-Pfaden), sodass das Modell von der Realität signifikant abweichen kann.

Um also die Vorhersage der Massenströme zu verifizieren (oder zu falsifizieren), kann eine der λ-Sonden (oder alle λ-Sonden) 10, 16 und/oder 18, für die eine Vorsteuerung bestimmt wurde, verwendet werden, um eine λ-Regetabweichung zu bestimmen. In anderen Worten wird der gemessene λ-Wert mit dem vorhergesagten λ-Wert verglichen. Resultiert dieser Vergleich in einer Abweichung oberhalb eines vorgegebenen Schwellwertes, kann dies auf einen Fehler im Massenstrommodell schließen lassen.

In anderen Worten können über die λ-Regetabweichungen (bspw. auch bei aktiver AGR) Tendenzen oder ein Maß des rückgeführten Restgases ermittelt werden, da das Restgas (Inertgas) nicht mehr an der Verbrennung teilnehmen kann und der Restgasanteil in der Vorsteuerung berücksichtigt wird.

Gibt es nun beispielsweise einen ungewollten Anstieg des rückgeführten Restgases, so wird bei der Verbrennung durch die Vorsteuerung weniger zugeführte Frischluftmasse zur Verfügung gestellt. Liegt ein Fehler in der AGR vor, ist der λ-Wert (im gleichen Betriebspunkt und im Vergleich zu einer fehlerfreien AGR) indikativ für ein fettes Gemisch, woraufhin der λ-Regter ein Abmagern des Gemischs indizieren kann. Dies kann beispielsweise einen Einfluss auf eine Motorleistung bzw. ein Motormoment haben.

Wird andererseits in der fehlerhaften AGR das rückgeführte Restgas ungewollt reduziert, so wird der Verbrennung durch die Vorsteuerung mehr Frischluftmasse zur Verfügung gestellt, sodass ein mageres Gemisch vorliegt, was der λ-Regler versucht durch Anfetten auszugleichen. Dies kann ebenfalls einen Einfluss auf die Motorleistung bzw. das Motormoment haben.

Wie bereits erwähnt, kann die λ-Regelabweichung basierend auf einem Least-Square-Verfahren ausgewertet werden.

Damit kann zwischen Offset- und Steigungsfehlern unterschieden werden, sodass Fehlersymptome unterschieden werden können, indem beispielsweise ein Restgasanteil (wie oben beschrieben) bestimmt wird.

Durch ungewollte High- oder Low-Flow-Fehler können, wie oben beschrieben, Motorleistungs- bzw. Motormomenteinflüsse entstehen, die eine Lastpunktverschiebung auslösen können.

Durch ein Least-Square-Verfahren kann die Fehlerauswertung bei gleichbleibendem Lastpunkt erfolgen, da in gemessenen Punkten bspw. über Adaptionswertbildung zwischen Anstieg- und Offsetfehlern unterschieden werden kann.

Fig. 3 zeigt ein Diagramm 35, in dem eine relative Kraftstoffmasse gegen eine relative Luftfüllung aufgetragen ist. In dem Diagramm 35 sind Messpunkte 36 sowie eine modellierte Kurve 37 für eine relative Kraftstoffmasse abgebildet. Mit einem Least-Square-Verfahren kann die Abweichung jeder der Messpunkte 36 von der modellierten Kurve 37 auf einen Offset-Fehler oder einen Steigungsfehler zurückgeführt werden.

In der folgenden Tabelle ist ein Massenstromabgleich ($j_D - (j_F + j_{AGR})$) bezüglich einer λ-Regelabweichung dargestellt und welche Fehlersymptome dadurch auftreten können.

| | Massenstromabgleich | | |
|---|---|---|---|
| λ-Regelabweichung | Zu groß | Zu klein | Im Rahmen |
| Anfetten / Low-Flow | Zu viel Frischluft in Ansaugstrecke (bspw. durch falschen Sensorwert des HFM) | Zu wenig Restgas aus AGR-Strecke durch Falschberechnung der AGR-Rate (bspw. durch positiven Offset des Druckdifferenzsensors, durch Leitungsverengung in der AGR-Strecke oder einer fehlerhaften AGR-Ventil-Position | - Zu wenig Restgas aus der AGR-Strecke durch Falschberechnung der AGR-Rate (bspw. durch Leitungsverstopfung zum Druckdifferenzsensor vor dem AGR-Ventil) <br> - Zu wenig Restgas aus der AGR-Strecke durch Frischluftansaugung bei Leckage zwischen dem AGR-Ventil und Entnahme Abgasstrang |
| Abmagern / High-Flow | - Zu viel Restgas aus AGR-Strecke durch Leckage in der AGR-Klappe, durch einen negativen Offset des Differenzdrucksensors, oder durch eine fehlerhafte AGR-Ventilposition <br> - Zu viel Restgas in der Ansaugstrecke durch Falschmodellierung der AGR-Rate, bspw. durch eine Leckage in der Leitung nach dem AGR-Ventil zum Differenzdrucksensor oder einem Leitungsabfall vor dem AGR-Ventil zum Differenzdrucksensor | Zu wenig Frischluft in Ansaugstrecke (bspw. durch falschen HFM-Sensorwert | |
| Keine Abweichung | Zu viel Frischluft in der Ansaugstrecke (bspw. durch Leckage in der Luftstrecke nach dem AGR-Ventil) | | |

Manche Ausführungsbeispiele betreffen eine Steuerung, die dazu eingerichtet ist, ein Diagnoseverfahren gemäß der vorliegenden Offenbarung auszuführen.

Die Steuerung kann jede Schaltung umfassen, die derart programmierbar ist, ein solches Verfahren auszuführen, wie zum Beispiel ein Prozessor (bspw. CPU (Central Processing Unit), GPU (Graphic Processing Unit)), FPGA (Field-Programmable Gate Array), ein Steuergerät, ein Computer (bspw. zentraler Bordcomputer oder externer Computer, bspw. auf einem Prüfstand), oder dergleichen. Auch Kombinationen von solchen Elementen sind denkbar.

Manche Ausführungsbeispiele betreffen ein Kraftfahrzeug, das eine Steuerung gemäß der vorliegenden Offenbarung aufweist.

7

Generell kann jedes Kraftfahrzeug solch eine Steuerung aufweisen, sofern das Kraftfahrzeug eine Brennkraftmaschine aufweist, wie hierin beschrieben. So kann jedes Landfahrzeug, Wasserfahrzeug, oder dergleichen einem Kraftfahrzeug der vorliegenden Offenbarung entsprechen.

Weitere Diagnosen können gemäß der vorliegenden Offenbarung wie folgt ausgeführt werden: Beispielsweise kann eine Rohluftklappe bis auf ein Maximum (bspw. unterer Anschlag) begrenzt werden. Die Rohluftklappe kann den unteren applizierbaren Anschlag erreichen, wenn eine Leitungsverengung vordem AGR-Ventil vorliegt (bspw. durch Versottung des AGR-Kühlers) oder wenn eine Leitung des Differenzdrucksensors nach dem AGR-Ventil fehlerhaft ist (bspw. kann der Differenzdrucksensor dann Null Millibar anzeigen, solange nicht genügend Abgasgegendruck aufgebaut wird). Die Differenzdruckregelung versucht dann den angeforderten AGR-Massenstrom über die Rohluftklappe einzuregeln, schafft dies jedoch nicht.

Eine Leitungsverstopfung zum Drucksensor nach dem AGR-Ventil kann bspw. durch Soll- zu Ist-AGR-Ratenberechnung diagnostiziert werden. In solch einem Fall kann der Drucksensor einen negativen Offset haben. Außerdem findet dann keine AGR-Differenzdruckregelung statt.

Eine AGR-Kühlerperformance kann anhand des Temperatursensors vor dem AGR-Ventil bestimmt werden, bspw. durch einen Vergleich einer modellierten Temperatur zu einer gemessenen Temperatur in vorbestimmten Betriebspunkten. Außerdem ist eine Diagnose auf maximale Schwellenüberschreitung möglich.

Eine Leitungsverengung oder-versottung im AGR-Pfad kann durch Verringerung eines Drucks des AGR-Pfades diagnostiziert werden. Hierfür können Relativ- oder Absolutdrucksensoren in der AGR-Strecke vor und/oder nach dem AGR-Ventil verwendet werden. Ist der gemessene Druck während eines definierten Betriebspunktes mit aktiver AGR im applizierbaren Bereich und unterhalb des eines vorbestimmten Wertes für einen Druck (bspw. ein Umgebungsdruck, ohne die vorliegende Offenbarung darauf zu beschränken), kann daraus auf eine Leitungsverstopfung geschlossen werden.

Slow-Response im AGR-Pfad kann beispielsweise erkannt werden, indem Komponenten im AGR-Ventil und/oder einer Androsselklappe (in Fig. 1 mit dem Bezugszeichen 23 versehen) einen Vergleich zwischen Ansteuerung eines Aktors und Lagerückmeldung der Komponente durchführen, bspw. mittels Dreiecksflächenberechnung.

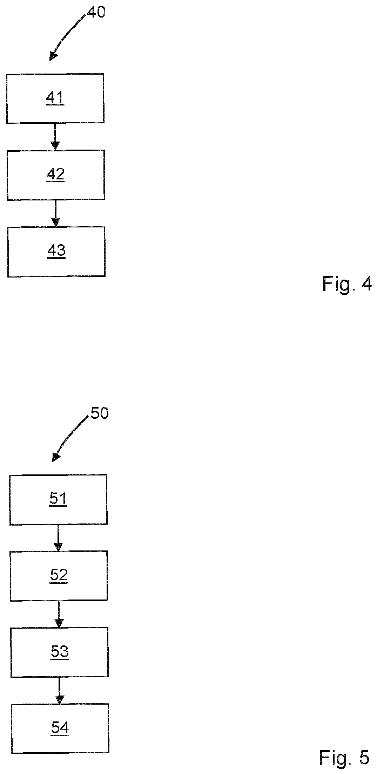

Ferner kann eine Schlauchvertauschung eines Differenzdrucksensors erkannt werden, indem eine Bewertung auf gemessenem positiven Differenzdruck erfolgt, wenn externe Abgasrückführung angefordert wird. Ist der gemessene Wert negativ, so lässt dies auf die Schlauchvertauschung schließen. Der Differenzdrucksensor kann entweder einen Differenzdruck direkt messen oder den Differenzdruck aus Absolut-/Relativdruck bestimmen. Ein Ausführungsbeispiel eines Diagnoseverfahrens 40 gemäß der vorliegenden Offenbarung ist in Fig. 4 in einem Blockdiagramm dargestellt.

In 41 wird eine Abgasrückführung ausgeführt, wie hierin beschrieben.

In 42 wird ein aktueller Diagnosesensorwert mittels eines Diagnosesensor erfasst. In diesem Ausführungsbeispiel werden über ein Massenstrommodell die jeweiligen Massenströme in den Gasleitungen berechnet, d.h. verschiedene Druck- und Temperatursensoren, sowie ein Frischluftmassenstromsensor werden verwendet als Diagnosesensor, wie hierin beschrieben. Damit wird, in 43, bestimmt, ob eine Abweichung eines Ist-Abgasflusses von einem Soll-Abgasfluss vorliegt, wie hierin beschrieben. Außerdem wird in diesem Ausführungsbeispiel eine Lambdaregelabweichung bestimmt, wie hierin beschrieben.

Ein weiteres Ausführungsbeispiel eines Diagnoseverfahrens 50 gemäß der vorliegenden Offenbarung ist in Fig. 5 in einem Blockdiagramm dargestellt.

In 51 wird eine Abgasrückführung ausgeführt, wie hierin beschrieben.

In 52 wird ein aktueller Diagnosesensorwert mittels eines Diagnosesensor erfasst. In diesem Ausführungsbeispiel wird eine Klopferkennung und eine Laufunruheerkennung durchgeführt, wie hierin beschrieben.

In 53 wird zusätzlich eine AGR-Rate bestimmt, um den Fehler quantifizieren zu können, falls einer vorliegt, wie hierin beschrieben.

In 54 wird ermittelt, ob die Abweichung vorliegt, wie hierin beschrieben.

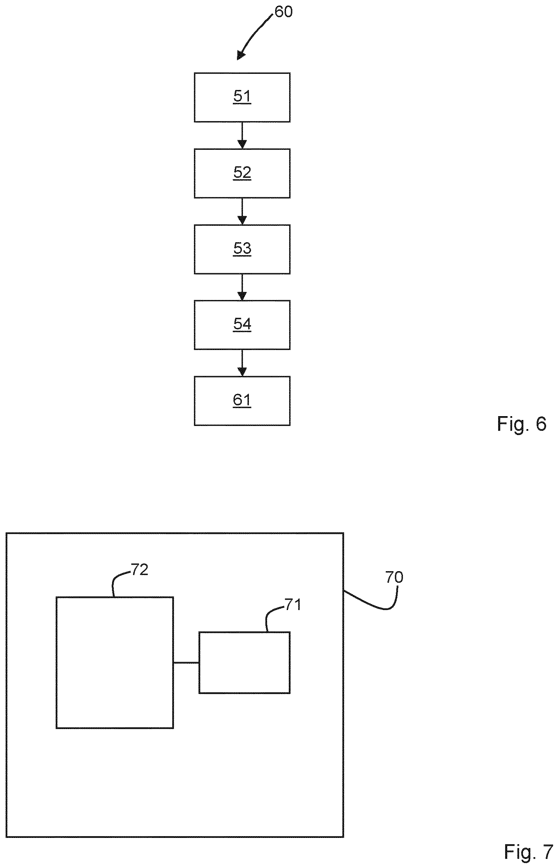

Ein weiteres Ausführungsbeispiel eines Diagnoseverfahrens 60 gemäß der vorliegenden Offenbarung ist in Fig. 6 in einem Blockdiagramm dargestellt.

In dem Diagnoseverfahren 60 entsprechen 51 bis 54 den bereits oben beschriebenen 51 bis 54. Zusätzlich wird, in 61, eine Lambdaregelabweichung basierend auf einer kleinste-Quadrate-Methode bestimmt, wie hierin beschrieben, um eine Fehlerquelle identifizieren zu können.

Fig 7 zeigt, in einem Blockdiagramm, eine schematische Darstellung eines Kraftfahrzeugs 70 gemäß der vorliegenden Offenbarung. Das Kraftfahrzeug 70 weist eine Steuerung gemäß der vorliegenden Offenbarung auf, die in diesem Ausführungsbeispiel als Motorsteuergerät 71 ausgebildet ist. Das Motorsteuergerät 71 ist dazu eingerichtet, ein Diagnoseverfahren gemäß der vorliegenden Offenbarung an einer Brennkraftmaschine 72 auszuführen, wie hierin beschrieben.

Die vorliegende Offenbarung ist nicht auf die oben beschriebenen Ausführungsbeispiele beschränkt. Weitere Ausführungsbeispiele der vorliegenden Offenbarung werden im Folgenden kurz zusammengefasst:

(1) Diagnoseverfahren für eine Niederdruck-Abgasrückführung einer Brennkraftmaschine, umfassend:

Ausführen einer Abgasrückführung;
Erfassen eines aktuellen Diagnosesensorwertes für ein Niederdruck-Abgasrückführsystem mittels eines Diagnosesensors, wobei der Diagnosesensorwert indikativ ist für eine Abweichung eines Ist-Abgasflusses der Niederdruck-Abgasrückführung von einem Soll-Abgasfluss; und
Ermitteln, ob die Abweichung vorliegt basierend auf dem Diagnosesensorwert.

(2) Diagnoseverfahren nach (1), ferner umfassend:
Ermitteln einer Abgasrückführungsrate.

(3) Diagnoseverfahren nach (2), ferner umfassend:
Ermitteln der Abgasrückführungsrate basierend auf wenigstens einem λ-Sensor.

(4) Diagnoseverfahren nach (2), ferner umfassend:
Ermitteln der Abgasrückführungsrate basierend auf einem Abgasrückführungsratenmodell.

(5) Diagnoseverfahren nach einem der (1) bis (4), ferner umfassend:
Erkennen einer Laufunruhe basierend auf dem aktuellen Diagnosesensorwert.

(6) Diagnoseverfahren nach (5), wobei, wenn eine Laufunruhe erkannt wird, die Abweichung indikativ ist für einen Abgasrückführungs-High-Flow-Fehler.

(7) Diagnoseverfahren nach einem der (1) bis (6) und 2, ferner umfassend:
Erkennen eines Klopfens basierend auf dem aktuellen Diagnosesensorwert.

(8) Diagnoseverfahren nach (7), wobei, ein Klopfen erkannt wird, die Abweichung indikativ ist für einen Abgasrückführungs-Low-Flow-Fehler.

(9) Diagnoseverfahren nach einem der (1) bis (8), ferner umfassend:
Bestimmen einer Lambdaregelabweichung.

(10) Diagnoseverfahren nach (9), ferner umfassend:
Kategorisieren der Abweichung in einen Offset- oder einen Steigungsfehler, basierend auf der Lambdaregelabweichung.

(11) Diagnoseverfahren nach einem der (9) und (10), wobei die Lambdaregelabweichung basierend auf einer kleinsten-Quadrate-Methode zwischen einer Luftmenge und einer Kraftstoffmenge bestimmt wird.

(12) Diagnoseverfahren nach (11), wobei die kleinste-Quadrate-Methode bei einem unveränderten Lastpunkt ausgeführt wird.

(13) Diagnoseverfahren nach einem der (9) bis (12), wobei die Lambdaregelabweichung indikativ ist für ein Ungleichgewicht von Frischluft und Restgas.

(14) Diagnoseverfahren nach (13), wobei, wenn die Lambdaregelabweichung ein Anfetten indiziert bei einem gleichzeitigen Massestrom oberhalb eines vorgegebenen Schwellwertebereichs, dies indikativ ist für zu viel Frischluft in einer Ansaugstrecke.

(15) Diagnoseverfahren nach (13) oder (14), wobei, wenn die Lambdaregelabweichung ein Anfetten indiziert bei einem gleichzeitigen Massestrom unterhalb eines vorgegebenen Schwellwertebereichs, dies indikativ ist für zu wenig Restgas in der Abgasrückführung.

(16) Diagnoseverfahren nach einem der (13) bis (15), wobei, wenn die Lambdaregelabweichung ein Anfetten indiziert bei einem gleichzeitigen Massestrom innerhalb eines vorgegebenen Schwellwertebereichs, dies indikativ ist für zu wenig Restgas in der Abgasrückführung.

(17) Diagnoseverfahren nach einem der (13) bis (16), wobei, wenn die Lambdaregelabweichung ein Abmagern indiziert bei einem gleichzeitigen Massestrom oberhalb eines vorgegebenen Schwellwertebereichs, dies indikativ ist für zu viel Restgas in der Abgasrückführung und/oder der Ansaugstrecke.

(18) Diagnoseverfahren nach einem der (13) bis (17), wobei, wenn die Lambdaregelabweichung ein Abmagern indiziert bei einem gleichzeitigen Massestrom unterhalb eines vorgegebenen Schwellwertebereichs, dies indikativ ist für zu wenig Frischluft in der Ansaugstrecke.

(19) Diagnoseverfahren nach einem der (13) bis (18), wobei, wenn die keine Lambdaregelabweichung vorliegt, aber ein Massestrom oberhalb eines vorgegebenen Schwellwertebereichs liegt, dies indikativ ist für zu viel Frischluft in der Ansaugstrecke.

(20) Diagnoseverfahren nach (1), ferner umfassend:
Durchführen eines Massenstromvergleichs basierend auf dem aktuellen Diagnosesensorwert.

(21) Diagnoseverfahren nach Anspruch 9, wobei der Massenstromvergleich auf einem Drosselklappenmodell basiert.

(22) Diagnoseverfahren nach (20) oder (21), wobei der Massenstromvergleich ferner auf einem Frischluftmassenstromwert basiert.

(23) Diagnoseverfahren nach einem der (20) bis (22), ferner umfassend:
Durchführen einer Frischluftmassenmesseradaption.

(24) Diagnoseverfahren nach einem der (20) bis (23), ferner umfassend:
Bestimmen einer Lambdaregelabweichung

(25) Diagnoseverfahren nach (24), ferner umfassend:
Kategorisieren der Abweichung in einen Offset- oder einen Steigungsfehler, basierend auf der Lambdaregelabweichung.

(26) Diagnoseverfahren nach einem der (24) und (25), wobei die Lambdaregelabweichung basierend auf einer kleinsten-Quadrate-Methode zwischen einer Luftmenge und einer Kraftstoffmenge bestimmt wird.

(27) Diagnoseverfahren nach (26), wobei die kleinste-Quadrate-Methode bei einem unveränderten Lastpunkt ausgeführt wird.

(28) Diagnoseverfahren nach einem der (24) bis (27), wobei die Lambdaregelabweichung indikativ ist für ein Ungleichgewicht von Frischluft und Restgas.

(29) Diagnoseverfahren nach (28), wobei, wenn die Lambdaregelabweichung ein Anfetten indiziert bei einem gleichzeitigen Massestrom oberhalb eines vorgegebenen Schwellwertebereichs, dies indikativ ist für zu viel Frischluft in einer Ansaugstrecke.

(30) Diagnoseverfahren nach (28) oder (29), wobei, wenn die Lambdaregelabweichung ein Anfetten indiziert bei einem gleichzeitigen Massestrom unterhalb eines vorgegebenen Schwellwertebereichs, dies indikativ ist für zu wenig Restgas in der Abgasrückführung.

(31) Diagnoseverfahren nach einem der (28) bis (30), wobei, wenn die Lambdaregelabweichung ein Anfetten indiziert bei einem gleichzeitigen Massestrom innerhalb eines vorgegebenen Schwellwertebereichs, dies indikativ ist für zu wenig Restgas in der Abgasrückführung.

(32) Diagnoseverfahren nach einem der (28) bis (31), wobei, wenn die Lambdaregelabweichung ein Abmagern indiziert bei einem gleichzeitigen Massestrom oberhalb eines vorgegebenen Schwellwertebereichs, dies indikativ ist für zu viel Restgas in der Abgasrückführung und/oder der Ansaugstrecke.

(33) Diagnoseverfahren nach einem der (28) bis (32), wobei, wenn die Lambdaregelabweichung ein Abmagern indiziert bei einem gleichzeitigen Massestrom unterhalb eines vorgegebenen Schwellwertebereichs, dies indikativ ist für zu wenig Frischluft in der Ansaugstrecke.

(34) Diagnoseverfahren nach einem der (28) bis (33), wobei, wenn die keine Lambdaregelabweichung vorliegt, aber ein Massestrom oberhalb eines vorgegebenen Schwellwertebereichs liegt, dies indikativ ist für zu viel Frischluft in der Ansaugstrecke.

(35) Diagnoseverfahren nach einem der (1) bis (34), ferner umfassend:
Begrenzen einer Rohluftklappe.

(36) Diagnoseverfahren nach einem der (1) bis (35), ferner umfassend:
Erkennen einer Leitungsverstopfung zu einem Drucksensor nach einem Abgasrückführungsventil basierend auf einer Bestimmung einer Abgasrückführungsrate und basierend auf einem Offset des Drucksensors.

(37) Diagnoseverfahren nach einem der (1) bis (36), ferner umfassend:
Erkennen eines Fehlers in einem Abgasrückführungskühler basierend auf einem Vergleich zwischen einer gemessenen Abgastemperatur und einer modellierten Abgastemperatur.

(38) Diagnoseverfahren nach einem der (1) bis (37), ferner umfassend:
Erkennen einer Leitungsverengung und/oder Versottung in der Abgasrückführung basierend auf einer applizierten Druckverringerung in der Abgasrückführung.

(39) Diagnoseverfahren nach einem der (1) bis (38), ferner umfassend:
Erkennen einer Slow-Response in der Abgasrückführung basierend auf einer Dreiecksflächenberechnung.

(40) Diagnoseverfahren nach einem der (1) bis (39), ferner umfassend:
Erkennen einer Schlauchvertauschung eines Differenzdrucksensor basierend auf einer Bewertung eines gemessenen positiven Differenzdrucks.

(41) Steuerung, die dazu eingerichtet ist, ein Diagnoseverfahren nach einem der (1) bis (40) auszuführen.

(42) Kraftfahrzeug, das eine Steuerung nach (41) aufweist.

**Bezugszeichenliste**

| | |
|---|---|
| 1 | Brennkraftmaschine |
| 2 | Luftfilter |
| 3 | Frischluftstrecke |
| 4 | Verdichter |
| 5 | Ladeluftkühler |
| 6 | Drosselklappe |
| 7 | Verbrennungsmotor |
| 8 | Turbine |
| 9 | Welle |
| 10 | λ-Sonde |
| 11 | Verzweigung |
| 12 | AGR-Zweig |
| 13 | AGR-Ventil |
| 14, 15 | Katalysatoren |
| 16, 17 | λ-Sonden |
| 18 | Abgasklappe |
| 19 | Diferenzdrucksensor |
| 20 | Temperatursensor |
| 21 | AGR-Filter |
| 22 | AGR-Kühler |
| 23 | Androsselklappe |
| 30 | Diagramm zur Klopf- bzw. Laufunruheerkennung |
| 35 | Diagramm zur kleinsten-Quadrate-Methode |
| 36 | Messpunkte |

| 37 | Modellierte Kurve |
| 40, 50, 60 | Diagnoseverfahren |
| 41, 51 | Ausführen einer Abgasrückführung |
| 42, 52 | Erfassen eines aktuellen Diagnosesensorwertes |
| 43, 54 | Ermitteln, ob Abweichung vorliegt |
| 53 | Bestimmen einer AGR-Rate |
| 61 | Bestimmen einer Lambdaregelabweichung |
| 70 | Kraftfahrzeug |
| 71 | Motorsteuergerät |
| 72 | Brennkraftmaschine |

**Patentansprüche**

1. Diagnoseverfahren für eine Niederdruck-Abgasrückführung einer Brennkraftmaschine, umfassend:

   Ausführen (41; 51) einer Abgasrückführung;
   Erfassen (42; 52) eines aktuellen Diagnosesensorwertes für ein Niederdruck-Abgasrückführsystem (12) mittels eines Diagnosesensors (10, 16, 17, 19, 20), wobei der Diagnosesensorwert indikativ ist für eine Abweichung eines Ist-Abgasflusses der Niederdruck-Abgasrückführung von einem Soll-Abgasfluss; und
   Ermitteln (43; 54), ob die Abweichung vorliegt basierend auf dem Diagnosesensorwert.

2. Diagnoseverfahren nach Anspruch 1, ferner umfassend:
   Ermitteln (53) einer Abgasrückführungsrate.

3. Diagnoseverfahren nach einem der Ansprüche 1 und 2, ferner umfassend:
   Erkennen einer Laufunruhe basierend auf dem aktuellen Diagnosesensorwert.

4. Diagnoseverfahren nach Anspruch 3, wobei die Abweichung indikativ ist für einen Abgasrückführungs-High-Flow-Fehler.

5. Diagnoseverfahren nach einem der Ansprüche 1 und 2, ferner umfassend:
   Erkennen eines Klopfens basierend auf dem aktuellen Diagnosesensorwert.

6. Diagnoseverfahren nach Anspruch 5, wobei die Abweichung indikativ ist für einen Abgasrückführungs-Low-Flow-Fehler.

7. Diagnoseverfahren nach einem der vorherigen Ansprüche, ferner umfassend:
   Bestimmen (61) einer Lambdaregelabweichung.

8. Diagnoseverfahren nach Anspruch 7, wobei die Lambdaregelabweichung basierend auf einer kleinsten-Quadrate-Methode zwischen einer Luftmenge und einer Kraftstoffmenge bestimmt wird.

9. Diagnoseverfahren nach Anspruch 1, ferner umfassend:
   Durchführen eines Massenstromvergleichs basierend auf dem aktuellen Diagnosesensorwert.

10. Diagnoseverfahren nach Anspruch 9, wobei der Massenstromvergleich auf einem Drosselklappenmodell basiert.

11. Diagnoseverfahren nach einem der Ansprüche 9 und 10, wobei der Massenstromvergleich ferner auf einem Frischluftmassenstromwert basiert.

12. Diagnoseverfahren nach einem der Ansprüche 9 bis 11, ferner umfassend:
    Bestimmen (61) einer Lambdaregelabweichung

13. Diagnoseverfahren nach Anspruch 12, wobei die Lambdaregelabweichung basierend auf einer kleinsten-Quadrate-Methode zwischen einer Luftmenge und einer Kraftstoffmenge bestimmt wird.

14. Steuerung (71), die dazu eingerichtet ist, ein Diagnoseverfahren (40; 50; 60) nach einem der vorherigen Ansprüche auszuführen.

**15.** Kraftfahrzeug (70), das eine Steuerung (71) nach Anspruch 14 aufweist.

Fig. 1

Fig. 2

Fig. 3

40

41

42

43

Fig. 4

50

51

52

53

54

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013200536 B3